## Europäisches Patentamt

(19) **European Patent Office**

**Office européen des brevets**

(11) Veröffentlichungsnummer: **0 219 559 B1**

(12) **EUROPÄISCHE PATENTSCHRIFT**

(45) Veröffentlichungstag der Patentschrift:
**05.09.90**

(51) Int. Cl.⁵: **H04Q 7/04, H04B 1/66**

(21) Anmeldenummer: **85113160.7**

(22) Anmeldetag: **17.10.85**

(54) **Mobilfunksystem für die Übertragung sowohl digitaler als auch analoger Signale.**

(43) Veröffentlichungstag der Anmeldung:
**29.04.87 Patentblatt 87/18**

(45) Bekanntmachung des Hinweises auf die Patenterteilung:
**05.09.90 Patentblatt 90/36**

(84) Benannte Vertragsstaaten:
**DE FR GB IT NL SE**

(56) Entgegenhaltungen:
**EP-A- 0 037 071**
**EP-A- 0 042 587**
**EP-A- 0 161 518**
**EP-A- 0 168 647**
**DE-A- 2 715 332**

**PATENTS ABSTRACTS OF JAPAN, Band 9,**
**Nr. 248 (E-347) [1971], 4. Oktober 1985; & JP - A**
**- 60 97 747 (NIPPON DENKI K.K.) 31-05-1985**
**TELCOM REPORT, Band 8, Nr. 2, März/April 1985,**
**Seiten 85-90, Berlin, DE; K. KAMMERLANDER:**
**"Eigenschaften des zellularen Mobilfunksystems**
**C450/900"**

(73) Patentinhaber: **ANT Nachrichtentechnik GmbH,**
**Gerberstrasse 33, D-7150 Backnang(DE)**

(72) Erfinder: **Sperlich, Josef, Dipl.-Ing., Kelterweg 52,**
**D-7150 Backnang(DE)**

# Beschreibung

Die vorliegende Erfindung betrifft ein Mobilfunksystem für die Übertragung sowohl digitaler als auch analoger Signale zwischen Feststationen und Mobilstationen, wobei die Übertragung digitaler Signale nach dem Zeitmultiplex-Verfahren in Kanalzeitschlitzen erfolgt, die in Rahmen zusammengefaßt sind und analoge Signale zeitlich komprimiert in den ihnen zugewiesenen Zeitschlitzen übertragen werden.

Ein derartiges Mobilfunksystem zur Übertragung sowohl analoger als auch digitaler Signale geht aus der EP-A 0 037 071 hervor. Dabei werden in die für analoge Signale vorgesehenen Zeitschlitze zusätzlich digitale Daten eingefügt. Um für die digitalen Daten in den Zeitschlitzen Platz zu schaffen, müssen auf der Sendeseite die analogen Sinale zeitkomprimiert werden. Auf der Empfangsseite werden die digitalen Daten aus den einzelnen Zeitschlitzen herausgetrennt, und die Zeitkompression der analogen Signale wird wieder rückgängig gemacht.

Ein Mobilfunksystem, das für die Übertragung rein digitaler Signale nach dem Zeitmultiplex-Verfahren konzipiert ist, geht aus dem "Mikrowellen-Magazin", Vol. 11, Nr. 1, 1985, S. 67-73, hervor.

Der Erfindung liegt nun die Aufgabe zugrunde, ein Mobilfunksystem der eingangs genannten Art für die Übertragung sowohl digitaler als auch analoger Signale anzugeben, das mit möglichst geringem Aufwand realisiert werden kann und die Mobilstationen mit möglichst niedriger Sendeleistung auskommen läßt.

Erfindungsgemäß wird diese Aufgabe durch die im Kennzeichen des Anspruchs 1 angegebenen Merkmale gelöst.

Zweckmäßige Ausführungen der Erfindung gehen aus den abhängigen Ansprüchen hervor.

Aus der EP-A 0 042 587 und den "IEE Proceedings", Vol. 131, Part F, Nr. 2, April 1984, S. 130-138, ist an sich ein sogenanntes TCM- (Time-compression multiplexing) Verfahren bekannt, nach dem kontinuierliche Signale in einzelne Signalburst unterteilt, diese Signalburst zeitlich komprimiert und schließlich im Zeitmultiplex übertragen werden. Hierbei wird jedem Signalburst ein redundanter Signalanteil vorangesetzt, der im Empfänger dazu ausgenutzt wird, um Verzerrungen des Signalbursts zu kompensieren.

Anhand eines in der Zeichnung dargestellten Ausführungsbeispiels wird nachfolgend die Erfindung näher erläutert. Es zeigen:

Fig. 1 das Schema eines Mobilfunksystems,
Fig. 2 die Frequenz-, Rahmen- und Kanalstruktur des Zeitmultiplex-Übertragungsverfahrens,
Fig. 3 das Funktionsschema einer Feststation,
Fig. 4 das Funktionsschema einer Mobilstation,
Fig. 5 den zeitlichen Ablauf der Erzeugung eines von einer Feststation zu einer Mobilstation übertragenen zeitkomprimierten analogen (TCM) Signals,
Fig. 6 den zeitlichen Ablauf der Erzeugung eines von einer Mobilstation zu einer Feststation übertragenen zeitkomprimierten analogen (TCM) Signals,
Fig. 7 das Funktionsschema für die Umwandlung eines TCM-Signals in ein analoges Signal in einer Mobilstation,
Fig. 8 das Funktionsschema für die Umwandlung eines analogen Signals in ein TCM-Signal in einer Mobilstation,
Fig. 9 das Funktionsschema für die Umwandlung eines pulscodemodulierten Signals in ein TCM-Signal in einer Feststation und
Fig. 10 das Funktionsschema für die Umwandlung eines TCM-Signals in ein pulscodemoduliertes Signal in einer Feststation.

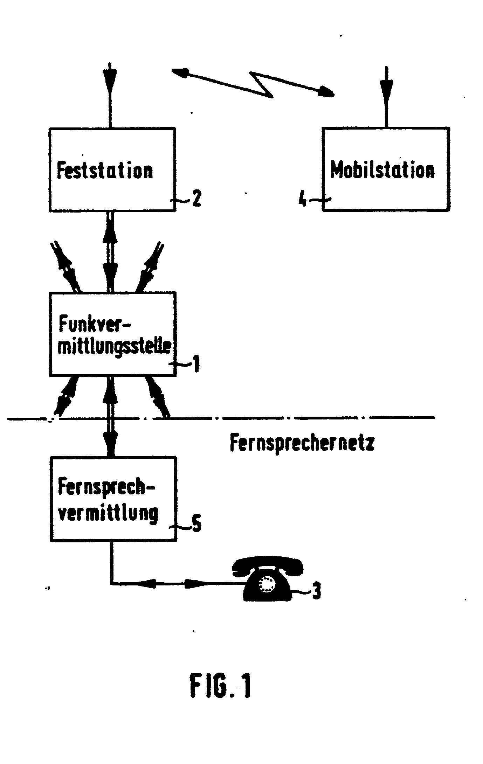

Bekanntlich ist ein Mobilfunknetz in mehrere Funkverkehrsbereiche aufgeteilt, zu denen jeweils, wie der Fig. 1 zu entnehmen ist, eine Funkvermittlungsstelle 1 und eine daran angeschlossene Feststation 2 gehören. Die Feststation 2 sendet Signale, die über die Funkvermittlungsstelle von einem stationären Teilnehmer 3 kommen, an die gesuchte Mobilstation 4 aus bzw. empfängt von dieser Mobilstation 4 Signale und leitet sie an die Funkvermittlungsstelle 1 weiter. Die Verbindung zwischen der Funkvermittlungsstelle 1 und dem stationären Teilnehmer 3 wird über die Fernsprechvermittlung 5 eines Fernsprechnetzes hergestellt. In der Fig. 1 ist angedeutet, daß die Funkvermittlungsstelle 1, auch Verbindungen zu anderen Funkvermittlungsstellen und Feststationen in dem Mobilfunknetz haben kann.

Jede der zum Mobilfunknetz gehörenden Feststationen ist mit mehreren im Zeitmultiplexbetrieb mit Vielfachzugriff (TDMA) arbeitenden Übertragungseinrichtungen ausgestattet, von denen jede einen Empfänger und einen Sender besitzt, die alle verschiedenen Frequenzbändern zugeordnet sind. Die Sender aller TDMA-Übertragungseinrichtungen sind über ein Koppelnetzwerk an eine gemeinsame Sendeantenne geschaltet, und ebenso erhalten die Empfänger aller TDMA-Übertragungseinrichtungen über einen Verstärker ihre Signale von einer Empfangsantenne.

Bei dem dieser Anmeldung zugrunde liegenden Mobilfunksystem sendet also jede TDMA-Übertragungseinrichtung mit einem einzigen auf ein eigenes Frequenzband abgestimmten Sender mehrere in TDMA-Rahmen zusammengefaßte, verschiedenen Mobilstationen zugeordnete Signalkanäle aus. Und jede TDMA-Übertragungseinrichtung empfängt mit einem einzigen Empfänger die von mehreren Mobilstationen in dem ihm zugeordneten Frequenzband burstweise ausgesendeten Signalkanäle.

Da die Mobilstationen burstweise ihre Signale aussenden, benötigen sie eine relative geringe Sendeleistung, was für die Mobilstationen Vorteile bzgl. Verlustleistung, Gerätegröße und Gewicht bringt.

Die TDMA-Übertragungseinrichtungen sollen für die Verarbeitung sowohl digitaler als auch analoger Signale geschaffen sein. Denn dann können neben Mobilstationen, die auf rein digitaler Basis arbeiten, auch Mobilstationen, die für die Übertragung analoger Signale ausgelegt sind, mit den Feststationen verkehren. In nur digital arbeitenden Mobilstationen werden analoge Sprachsignale üblicherweise mit Sprachcodierern in digitale Signale mit für die Übertragung geeigneten Codes umgesetzt bzw. solche empfangene digitale Signale mittels Sprachdecodierern in analoge Sprachsignale zurückgewandelt.

Mobilstationen, die für das weiter unten beschriebene Verfahren zur Übertragung analoger Signale ausgelegt sind, sind weniger aufwendig und haben einen geringeren Energiebedarf als die mit Sprachcodierern und -decodierern ausgestatteten Mobilstationen. Wegen des geringeren Energiebedarfs, d.h. Einsparung an Batteriegewicht und kleines Volumen, bietet es sich an, gerade tragbare Mobilstationen für die Übertragung analoger Signale auszulegen.

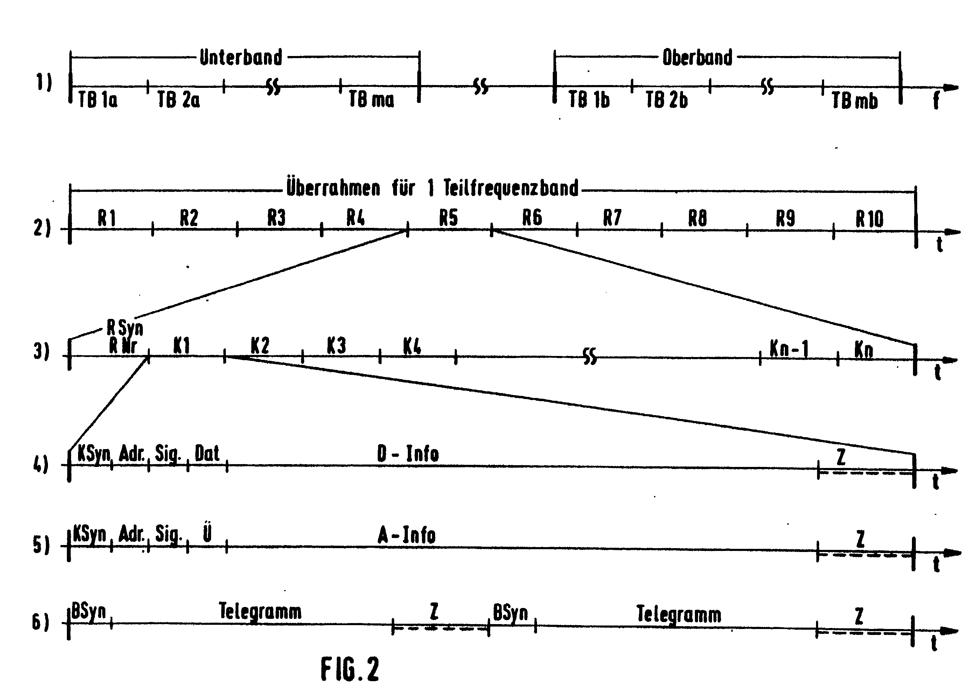

In der Fig. 2 sind das für die Übertragung sowohl digitaler als auch analoger Signale verfügbare Frequenzband, seine Unterteilung in Teilfrequenzbänder, sowie die Struktur der TDMA-Rahmen und -Kanäle dargestellt.

Das gesamte für das Mobilfunksystem zur Verfügung stehende Frequenzband ist, wie die Zeile 1) in Fig. 2 zeigt, in ein Oberband, das den Sendern der Feststationen zugeordnet ist, und in ein Unterband, das den Empfängern der Feststationen zugeordnet ist, eingeteilt. Dabei ist jeder Sender einer Übertragungseinrichtung auf ein eigenes Teilfrequenzband TB1b ... TBmb im Oberband und jeder Empfänger auf ein eigenes Teilfrequenzband TB1a ... TBma im Unterband abgestimmt. Jeder Mobilstation werden, bevor sie einen Informationsaustausch mit einer Feststation beginnt, für die Signalübertragung ein Teilfrequenzband aus dem Oberband und ein korrespondierendes Teilfrequenzband gleicher Ordnungszahl aus dem Unterband zugewiesen. Der Sender und der Empfänger einer jeden Übertragungseinrichtung einer Feststation übertragen in ihren Teilfrequenzbändern bis zu n Signalkanäle, die nach dem TDMA-Verfahren in Rahmen zusammengefaßt werden.

Jeweils 10 Rahmen bilden, wie die Zeile 2) in Fig. 2 verdeutlicht, einen Überrahmen. Den Aufbau eines einzelnen TDMA-Rahmens zeigt die Zeile 3). Ein solcher Rahmen beginnt mit einem Rahmen-Synchronwort RSyn und einer Rahmennummer RNr, die mit jedem neuen Rahmen um eine Einheit erhöht wird bis diejenige Nummer erreicht ist, die mit der Anzahl (z.B. 10) der zu einem Überrahmen gehörenden Rahmen übereinstimmt, um dann gelöscht und erneut hochgezählt zu werden.

Nach dem Rahmen-Synchronwort RSyn und der Rahmennummer RNr folgen die Signalkanäle K1 ... Kn. Jede Feststation hat mindestens eine Übertragungseinrichtung, welche in ihrem Sendeteilfrequenzband und in ihrem Empfangsteilfrequenzband den ersten Kanal K1 der TDMA-Rahmen mit einem Organisationskanal belegt. Allen Mobilstationen sind diejenigen Frequenzteilbänder, in denen TDMA-Rahmen mit Organisationskanälen übertragen werden, bekannt.

Die Mobilstationen orientieren sich für eine Signalübertragung jeweils auf eine benachbarte Feststation, deren ausgesendetes Signal sie am besten empfängt. Um aber während des Fortbewegens sich auf neue Feststationen orientieren zu können, müssen die Mobilstationen die von den Feststationen ausgesendeten Signale messen. Es ist deshalb vorgesehen, daß eine Mobilstation zunächst in nur einem TDMA-Rahmen des Überrahmens und zwar im Organisationskanal für sich bestimmte Informationen z.B. zur Teilnehmersuche erwartet, während in den übrigen Rahmen für diese Mobilstation keine Information enthalten ist. Die Mobilstation kann deshalb in der Übertragungszeit der anderen TDMA-Rahmen die Signale benachbarter Feststationen messen. Zweckmäßigerweise erhält die Mobilstation nur in Rahmen mit gleicher Nummer wie ihre Teilnehmerendziffer Information im Organisationskanal (z.B. Rufinformation, d.h. ein Suchsignal).

Von jeder Übertragungseinrichtung einer Feststation werden die TDMA-Rahmen mit den Signalkanälen in kontinuierlicher Folge ausgesendet. Jede Mobilstation entnimmt aus dem empfangenen TDMA-Rahmen nur den ihr zugewiesenen Signalkanal und benutzt Synchronworte in den anderen Kanälen lediglich zur Aufrechterhaltung der Taktsynchronität und zur Nachregelung des Übertragungsbittaktes. Die Mobilstationen selbst senden ihre Signale burstweise Rahmen für Rahmen in den ihnen zugewiesenen Kanalzeitschlitzen an die Feststationen aus.

Wie die Kanäle, in denen Nutzinformation (Daten, Sprache) übertragen wird, aufgebaut sind, verdeutlichen die Zeilen 4) und 5) in Fig. 2. Jeder Kanal beginnt mit einem Kanalsynchronwort KSyn und einer Kanaladresse Adr, der sich ein Signalisierungsblock Sig anschließt. Diese sprach- oder datenbegleitende Signalisierung, auch Inbandsignalisierung genannt, enthält z.B. Informationen über Gebühreneinheiten, über Sendeleistungseinstellungen, über Zuweisungen zu neuen Teilfrequenzbändern, über Umschaltungen von analogen auf digitale Sprachsignale oder auf Datensignale, Quittierungen etc. U.U. ist dann noch ein Block Dat für andere Organisationsdaten vorgesehen (vgl. Z. 4)). Der überwiegende Teil des Kanals wird von der eigentlichen Nutzinformation belegt, welche entweder aus Sprach- oder Datensignalen besteht. Datensignale werden wie das Kanalsynchronwort KSyn, die Kanaladresse Adr und die Signalisierung Sig digitalisiert übertragen. Sprachsignale können dagegen entweder digitalisiert (vgl. D-Info in Z. 4)) oder in analoger Form (vgl. A-Info in Z. 5)) übertragen werden. Der analoge Nutzsignalkanal in Zeile 5 besitzt einen Bereich für ein analoges Überlappungssignal Ü, dessen Bedeutung später erläutert wird.

Am Ende eines jeden Kanals ist ein Block Z vorgesehen, der in der Übertragungsrichtung von den Feststationen zu den Mobilstationen Systeminformation enthalten kann, und in der Übertragungsrichtung von den Mobilstationen zu den Feststationen für den Ausgleich der verschiedenen Laufzeiten der übertragenen Signalkanäle ausgenutzt wird. Die Zeile 6) zeigt die Struktur eines Organisationskanals, der in mehrere (hier zwei) Telegrammblöcke unterteilt ist. Jeder Telegrammblock besteht aus einem Block-Synchronwort BSyn, einem die Organisationsinformation enthaltenen Telegramm und einem oben angesprochenen Block Z.

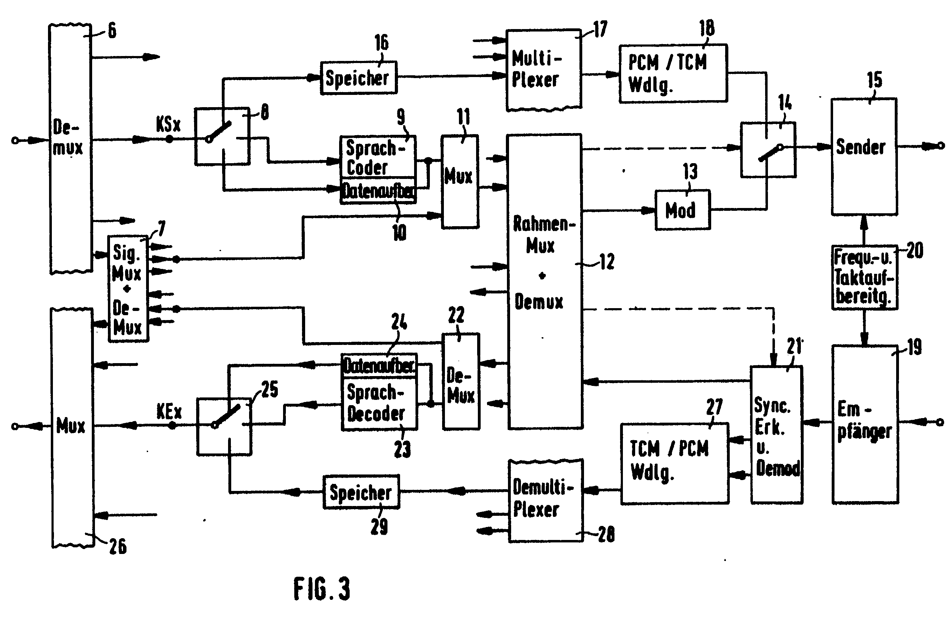

Das Funktionsschema einer für die Übertragung sowohl digitaler als auch analoger Signale ausgelegte Übertragungseinrichtung in einer Feststation ist der Fig. 3 zu entnehmen.

Ein Demultiplexer 6 teilt die von einer Funkvermittlungsstelle kommenden pulscodemodulierten (PCM) Sprach- oder Datenkanäle und ein anderer Multiplexer/Demultiplexer 7 die kanalbegleitende Signalisierung Sig den einzelnen Übertragungseinrichtungen in der Feststation zu. In der Fig. 3 sei die Signalverarbeitung nur eines von einer Funkvermittlungsstelle gelieferten, an eine Mobilstation auszusendenden Signalkanals KSx und eines von einer Mobilstation ausgesendeten und von der Feststation empfangenen Signalkanals KEx dargestellt.

Ein Schalter 8 schaltet das von der Funkvermittlungsstelle über den Demultiplexer 6 kommende Signal KSx, wenn es ein PCM-Sprachsignal ist, das als Digitalsignal ausgesendet werden soll, an einen Sprachcodierer 9 oder, wenn es ein Datensignal ist, an eine Datenaufbereitungseinrichtung 10 durch. Der Sprachcoder 9 setzt die pulscodemodulierte (PCM) Sprache mit der Bitrate von 64 kbit/s in eine digitales Codesignal mit wesentlich niederer Bitrate um (z.B. mittels RELP- oder Subband-Coder in 8 oder 16 kbit/s). Die Datenaufbereitungseinrichtung 10 entnimmt dem 64 kbit/s Signalstrom die eigentliche Nutzinformation (z.B. 2,4 oder 4,8 kbit/s) und füllt die Differenz bis zur Übertragungsbitrate am Funkweg (z.B. 8 oder 16 kbit/s) mit Bit für die Datensicherung auf dem Funkweg auf.

Ein Kanalmultiplexer 11 fügt das vom Sprachcodierer 9 bzw. von der Datenaufbereitungseinrichtung 10 bereitgestellte digitalisierte Signal mit einem Kanalsynchronwort, einer Kanaladresse und der Signalisierung zu einem kompletten Kanal zusammen. Dieser so aufgebaute Kanal wird dann in einem Rahmenmultiplexer/-demultiplexer 12 mit mehreren anderen gleichartigen Kanälen in TDMA-Rahmen zusammengesetzt, jedem Rahmen ein Rahmensynchronwort und eine Rahmennummer vorangestellt, sämtliche so zusammengestellte Rahmen einem Frequenz- oder Phasenmodulator 13 zugeführt und über einen Schalter 14 kontinuierlich einem Sender 15 übergeben.

Soll ein von einer Funkvermittlungsstelle über den Demultiplexer 6 kommendes pulscodemoduliertes Sprachsignal als analoges Signal übertragen werden, so ist der Schalter 8 auf den Speicher 16 geschaltet. Es wird zunächst das Kanalsynchronwort, die Kanaladresse und die kanalbegleitende Signalisierung an den Rahmenmultiplexer 12 übergeben, der diese Digitalsignalbursts über den Modulator 13 und den Schalter 14 an den Sender 15 weiterreicht. Nach der Übergabe des letzten Signalisierbits an den Sender 15 schaltet der Schalter 14 auf einen Wandler 18, der die PCM-Signale in zeitkomprimierte analoge Signale (time-compression multiplex (TCM)-Signale) umsetzt. Das in den Speicher 16 kontinuierlich eingelesene PCM-Sprachsignal wird burstweise wieder ausgelesen und zwar mit einer höheren Geschwindigkeit als es eingelesen wurde, um eine Zeitkompression zu erzielen. Die vom Speicher 16 ausgegebenen zeitkomprimierten Signalbursts sind in ihrer Länge an den in den TDMA-Kanalzeitschlitzen zur Verfügung stehenden Zeitbereich angepaßt. Ein Multiplexer 17 ordnet die von dem Speicher 16 und anderen in Fig. 3 nicht eingezeichneten gleichartigen Speichern gelieferten PCM-Signale in die zugehörigen Kanalzeitschlitze der TDMA-Rahmen ein und übergibt sie an den PCM/TCM-Wandler 18.

Der Sender 15 wie auch ein Empfänger 19 sind an eine Schaltung 20 angeschlossen, welche die Taktaufbereitung für die auszusendenden und empfangenen Signalbursts vornimmt und den Sender und Empfänger auf diejenigen Teilfrequenzbänder einstellt, denen die Signalbursts jeweils zugeordnet sind.

In Gegenrichtung werden die im Empfänger 19 eingegangenen Signalbursts an eine Schaltungseinheit 21 übergeben, die die Signale demoduliert und von jedem Signalburst das Kanalsynchronwort detektiert. Die Schaltungseinheit 21 ermittelt aus der Lage der empfangenen Kanalsynchronworte innerhalb der den Signalbursts fest zugeordneten Kanalzeitschlitze die Laufzeiten der einzelnen Signalburst und bringt alle Synchronbursts in den Kanalzeitschlitzen in eine einheitliche durch die größtmögliche Laufzeit vorgegebene Zeitlage, indem sie die Signalbursts in Abhängigkeit von ihren Laufzeiten verzögert.

Sofern ein empfangener Signalkanal ein digitales Sprachsignal oder ein Datensignal enthält, wird der gesamte Signalkanal mit der Kanaladresse der Signalisierung und der Nutzinformation (Sprache der Daten) dem Rahmendemultiplexer 12 übergeben, der alle eingehenden Signalkanäle des gleichen Teilfrequenzbandes aufteilt und jeden Signalkanal einem eigenen Kanaldemultiplexer 22 übergibt. Dieser Kanaldemultiplexer 22 führt die Signalisierung dem Demultiplexer 7 und das digitale Sprachsignal einem Sprachdecodierer 23 bzw. das Datensignal einer Datenaufbereitungseinrichtung 24 zu. Der Sprachdecodierer 23 und die Datenaufbereitungseinrichtung 24 verarbeiten die Signale reziprok zu dem oben erwähnten Sprachkodierer 9 und der Datenaufbereitungseinrichtung 10. Ein Schalter 25 verbindet die Ausgänge des Sprachdecodierers 23 und der Datenaufbereitungseinrichtung 24 mit einem Multiplexer 26, der alle in der Feststation eingegangenen Signalkanäle in einem kontinuierlichen Datenstrom an eine Funkvermittlungsstelle weiterleitet.

Enthält der empfangene Signalkanal ein analoges zeitkomprimiertes Sprachsignal (TCM-Signal), so trennt die Schaltungseinheit 21 das TCM-Signal von dem digitalen Kanalsynchronwort, der Kanalnummer und der Signalisierung, die den bereits beschriebenen Weg nehmen, ab und gibt es an einen Wandler 27 weiter, der das TCM-Signal in ein PCM-Signal umsetzt. Alle seriell aus dem Wandler 27 ausgegebenen PCM-Signalkanäle teilt der Demultiplexer 27 auf einzelne einem jeden PCM-Signalkanal zugeordnete Speicher 29 auf. Der Speicher 29 gibt den in ihm eingelesenen PCM-Signalkanal mit einer größeren Geschwindigkeit als die Einlesegeschwindigkeit wieder aus, um die mobilstationsseitig erwirkte Zeitkompression wieder rückgängig zu machen. Der zeitlich dekomprimierte PCM-Signalkanal wird vom Schalter 25 dem Multiplexer 26 zugeleitet.

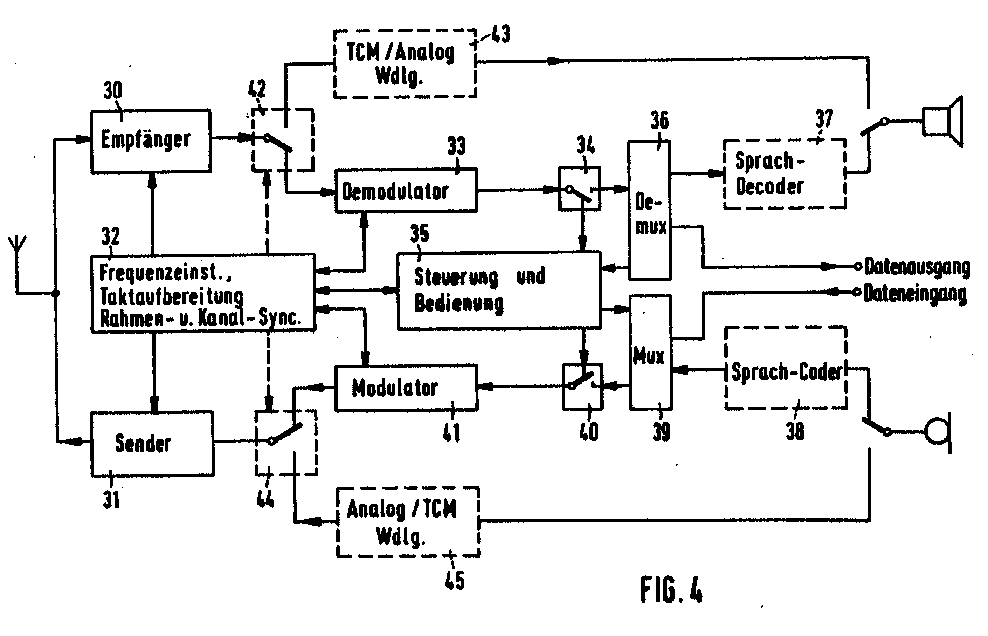

Die Fig. 4 zeigt das Funktionsschema einer Mobilstation mit einem Empfänger 30 und einem Sender 31, die beide von einer Schaltung 32 auf jedes von den Feststationen des Mobilfunknetzes angewiesenen Teilfrequenzbänder im Ober- und im Unterband eingestellt werden können. Außerdem besitzt diese Schaltung 32 eine Taktaufbereitung und ist in der Lage, die Rahmen- und Kanalsynchronworte zu erkennen und die Rahmen und Kanäle zu zählen.

Handelt es sich um eine Mobilstation, die nur digitale Signale verarbeitet, so ist der Empfänger 30 direkt mit einem Demodulator 33 verbunden. Von diesem Demodulator 33 werden zunächst alle empfangenen Signalkanäle eines TDMA-Rahmens im angewiesenen Teilfrequenzband demoduliert. Eine Schalteinrichtung 34 trennt von all den empfangenen Signalkanälen denjenigen Signalkanal ab, der der Mobilstation von der Funkvermittlungsstelle zugewiesen worden ist, und leitet den Signalkanal, falls er ein Organisationskanal ist, an eine Steuerungs- und Bedienungseinheit 35 und, falls er Nutzinformation (Sprache, Daten) enthält, an einen Kanaldemultiplexer 36 weiter. Der Kanaldemultiplexer 36 führt digitale Sprachsignale einem Sprechdecodierer 37 zu, gibt Datensignale auf einen Datenausgang und leitet kanalbegleitende Signalisierungsinformation an die Steuerungs- und Bedieneinheit 35 weiter.

In Senderichtung werden die von einem Sprachcodierer 38 in Digitalsignale umgesetzten Sprachsignale oder die an einem Dateneingang anliegenden Datensignale und von der Steuerungs- und Bedieneinheit 35 gelieferte Signalisierung in einem Kanalmultiplexer 39 zu einem Signalkanal zusammengefaßt. Eine Schalteinrichtung 40 führt entweder diesen die Nutzinformation enthaltenden Kanal oder einen von der Steuerungs- und Bedieneinheit 35 bereitgestellten Organisationskanal einem Modulator 41 zu, der sein Ausgangssignal an den Sender 31 weitergibt.

Handelt es sich um eine Mobilstation, welche für den Empfang und das Aussenden analoger TCM-Sprachsignale ausgelegt ist, so entfallen der Sprachdecodierer 37 und der Sprachcodierer 38. Wenn ein Signalkanal mit einem TCM-Sprachsignal von der Mobilstation empfangen wird, ist der Empfänger 30, solange das digitale Kanalsynchronwort, die Kanaladresse und die kanalbegleitende Signalisierung eintreffen, über einen Schalter 42 mit dem Demodulator 33 und dieser über die Schalteinrichtung 34 mit der Steuer- und Bedieneinheit 35 verbunden. Nach Eintreffen der digitalen Signalblöcke verbindet der Schalter 42 den Empfänger 30 mit einem TCM/Analog-Wandler 43, der, wie weiter unten noch genauer beschrieben, das zeitkomprimierte analoge Sprachsignal in ein zeitlich dekomprimiertes analoges Sprachsignal umwandelt und es an einen elektro-akustischen Wandler weitergibt.

In Senderichtung wird, nachdem von der Steuer- und Bedieneinheit 35 das digitale Kanalsynchronwort, die Kanaladresse und die Signalisierung über den Modulataor 41 auf den Sender 31 gegeben worden ist, von einem Schalter 44 ein weiter unten beschriebener Analog/TCM-Wandler 45 mit dem Sender 31 verbunden. Dieser Analog/TCM-Wandler 45 setzt ein von einem Mikrofon kommendes analoges Sprachsignal in ein TCM-Signal um, das in der Restzeit des Kanalzeitschlitzes nach dem digitalen Kanalteil (Synchronwort, Adresse, Signalisierung) ausgesendet wird.

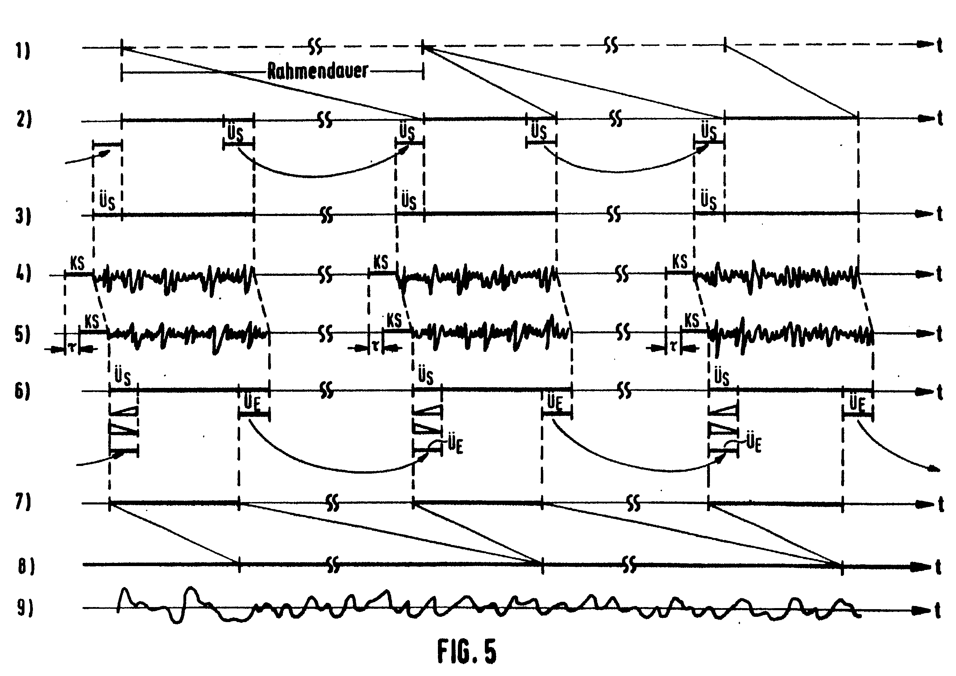

In der Fig. 5 ist der zeitliche Ablauf der Signalverarbeitung eines von einer Feststation zu einer Mobilstation übertragenen zeitkomprimierten analogen Sprachsignals (TCM-Signal) dargestellt. So soll die Zeile 1) ein zu sendendes Sprachsignal symbolisieren, das die Feststation von einer Funkvermittlungsstelle in Form eines pulscodemodulierten (PCM) Signals erhalten hat. Dieses während einer Rahmendauer in der Feststation eintreffende PCM-Signal wird gespeichert. Anschließend wird das PCM-Signal aus dem Speicher in einem zeitkomprimierten Burst herausgelesen. Die Bursts sind in ihrer Länge an die in den Kanalzeitschlitzen zur Verfügung stehenden Zeitbereiche angepaßt. Vor der Umwandlung dieser PCM-Signalbursts in analoge Signalbursts wird, wie die Zeile 2) verdeutlicht, jeweils ein kleiner Endbereich eines jeden einem bestimmten Kanalzeitschlitz zugeordneten Bursts demjenigen Burst vorangestellt, der in dem entsprechenden Kanalzeitschlitz eine TDMA-Rahmendauer später folgt. Dieser wiederholte Burstteil wird hier Überlappungsinformation $Ü_S$ genannt. Die Zeile 3) zeigt einen PCM-Kanalburst mit vorangesetzter Überlappungsinformation $Ü_S$ in mehreren aufeinanderfolgenden TDMA-Rahmen. Dieser PCM-Kanalburst mit Überlappungsinformation wird, wie aus der Zeile 4) hervorgeht, in ein analoges Signal umgesetzt und anschließend an einen digitalen Block KS, bestehend aus dem Kanalsynchronwort, der Kanaladresse und der Signalisierung, angehängt.

Der übertragene Signalkanal mit dem TCM-Informationssignal und dem digitalen Block KS wird, wie Zeile 5) andeutet, von der Mobilstation um die Signallaufzeit $\tau$ verzögert empfangen. Nachdem der digitale Block KS vom Signalkanal abgetrennt worden ist, wird das TCM-Signal in ein digitales Signal gewandelt und dessen Überlappungsinformation $Ü_S$ auf folgende Weise dazu ausgenutzt, um Verzerrungen des zeitkomprimierten Signals, die durch Einschwingvorgänge bei der burstweisen Übertragung entstehen, zu kompensieren (s. Z. 6)). Und zwar wird der Endbereich $Ü_E$ eines jeden Kanalbursts abgetrennt und dem Anfangsbereich $Ü_S$ des entsprechenden eine Rahmendauer später folgenden Kanalbursts überlagert. Von den beiden gleichlangen Bereichen $Ü_E$ und $Ü_S$, welche ja den gleichen Informationsinhalt besitzen, wird dem von 0 auf 1 ansteigend amplitudenbewerteten Anfangsbereich $Ü_S$ der von 1 auf 0 abfallend amplitudenbewertete Endbereich $Ü_E$ überlagert. Amplitudenanstieg und -abfall können linear oder nach irgendeiner anderen Funktion derart erfolgen, daß beide Bereiche $Ü_S$ und $Ü_E$ in Summe einen konstanten von Verzerrungen freien Amplitudenverlauf ergeben. Die in Zeile 7 dargestellten vom Endbereich $Ü_E$, welcher als Überlappungsinformation diente, befreiten Signalbursts aus einem Kanalzeitschlitz aufeinanderfolgender TDMA-Rahmen werden nun zeitlich so dekomprimiert, daß alle Signalbursts zeitlich lückenlos aneinandergereiht sind (s. Z. 8)), und werden danach in ein analoges Sprachsignal (s. Z. 9)) umgesetzt.

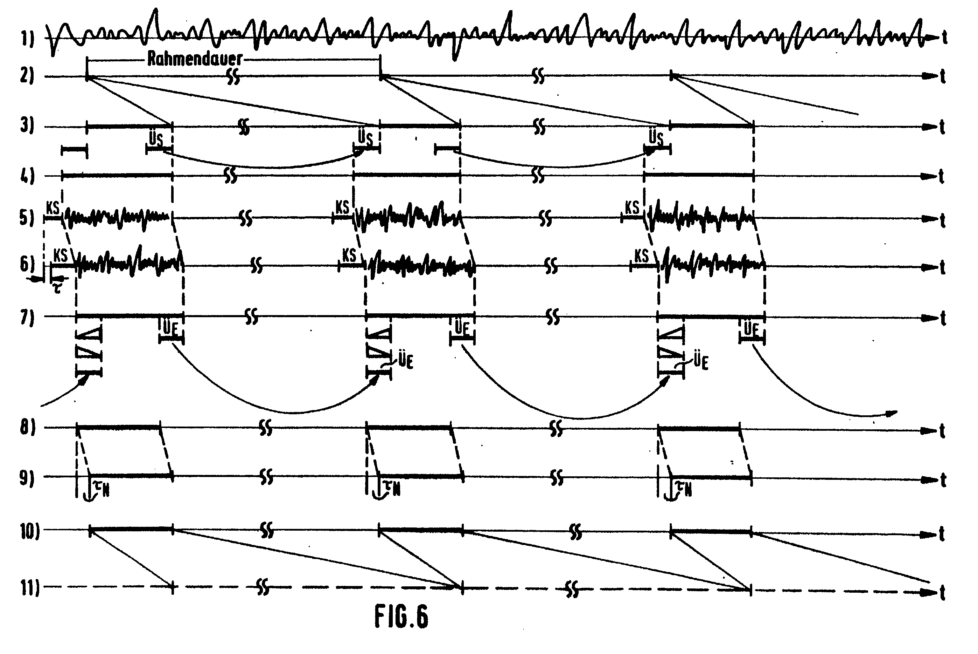

In der Fig. 6 ist der zeitliche Ablauf der Signalverarbeitung eines von einer Mobilstation zu einer Feststation übertragenen zeitkomprimierten analogen Sprachsignals (TCM-Signal) dargestellt. Die Zeile 1) der Fig. 6 zeigt ein analoges Sprachsignal, das z.B. am Ausgang eines Mikrofons ansteht. Dieses analoge Sprachsignal wird zunächst in ein digitales Signal (s. Z. 2)) umgewandelt. Die anschließende Weiterbehandlung dieses digitalen Signals in der Mobilstation gemäß den Zeilen 3) bis 5) in Fig. 6 gleicht der PCM/TCM-Wandlung in der Feststation gemäß den Zeilen 2) bis 4) in Fig. 5, und die Signalverarbeitung des empfangenen TCM-Signals in der Feststation gemäß den Zeilen 6) bis 8) in Fig. 6 entspricht dem in den Zeilen 5) bis 7) für Fig. 5 dargestellten Signalwandlungsprozeß, den die Mobilstation an einem empfangenen TCM-Signal vollzieht.

In der Feststation wird das in ein digitales Signal umgewandelte TCM-Sprachsignal (s. Z. 8)) einer sogenannten Laufzeitnormierung unterzogen (s. Z. 9)). D.h. die von den verschieden weit entfernten Mobilstationen ausgesendeten und nach unterschiedlich langen Laufzeiten empfangenen Signalkanäle werden alle auf eine einheitliche Laufzeit $\tau_N$ verzögert, welche der längsten vorkommenden Signallaufzeit entspricht. Somit lassen sich die laufzeitnormierten Signalbursts eindeutig in die ihnen zugewiesenen Kanalzeitschlitze der TDMA-Rahmen einordnen.

Die Zeilen 10) und 11) in Fig. 6 verdeutlichen die bereits in Zusammenhang mit Fig. 5 Zeilen 7) und 8) beschriebene zeitliche Dekompression der Signalbursts.

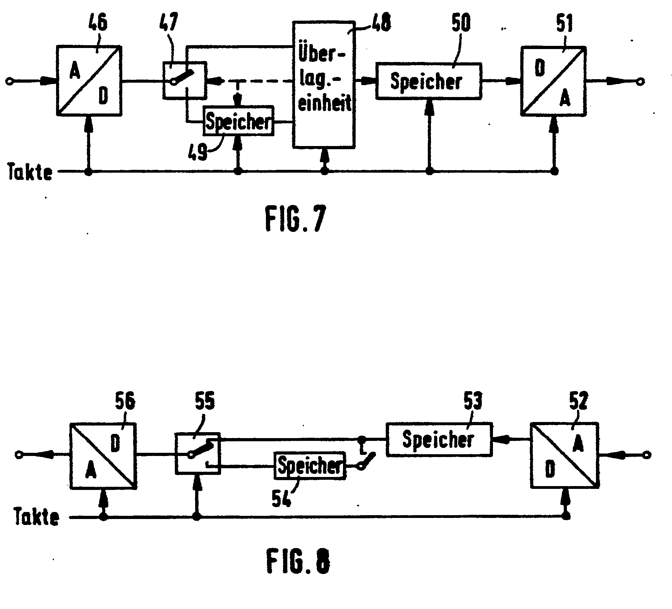

Aus der Fig. 7 geht ein Fuktionsschema hervor, nach welchem in einer Mobilstation die Umwandlung eines analogen zeitkomprimierten (TCM) Signals in ein analoges Sprachsignal erfolgen kann.

Ein von der Mobilstation empfangener analoger TCM-Signalburst wird zunächst mittels eines Analog-Digital-Wandlers 46 in einen digitalen Signalburst umgesetzt. Der digitale Signalburst gelangt dann über einen Schalter 47 an eine Schaltungseinheit 48. Sobald der als Überlappungsinformation (vgl. Z. 6) in fig. 5) dienende Endbereich des Signalbursts am Ausgang des Analog-Digital-Wandlers 46 erscheint, schaltet der Schalter 47 auf einen Speicher 49 um, der den Endbereich einliest. In die Schaltungseinheit 48 wird gleichzeitig mit Eingang des Signalbursts auch der im Speicher 49 abgelegte Endbereich des vor einer Rahmendauer empfangenen Signalbursts übernommen und dieser Endbereich dem Anfangsbereich des neuen Signalbursts nach der oben bereits im Zusammenhang mit Zeile 6) in Fig. 5 beschriebenen Amplitudenbewertung überlagert. Der so in der Schaltungseinheit 48 behandelte Signalburst wird in einen Speicher 50 eingelesen und aus diesem mit einer kleineren, die Zeitkompression rückgängig machenden Geschwindigkeit kontinuierlich ausgelesen. Schließlich wird der zeitlich dekomprimierte digitale Signalburst in ein analoges Sprachsignal mittels eines Digital-Analog-Umsetzers 51 umgewandelt.

Wird anstelle des Analog-Digital-Wandlers 46 ein Abtastschalter zur Erzeugung von pulsamplitudenmodulierten Signalproben, anstelle der Digitalspeicher 49 und 50 ladungsgekoppelte PAM-Speicher (Charge Coupled Devices), anstelle des Digital-Analog-Wandlers 51 ein Tiefpaßfilter für einen Sprachkanal mit z.B. 4kHz Bandbreite verwendet, so kann auch mit diesen Schaltelementen die TCM/Analog-Wandlung vorgenommen werden.

Ein Funktionsschema zur Umwandlung eines analogen Sprachsignals in TCM-Signalbursts innerhalb einer Mobilstation zeigt die Fig. 8. Hierbei wird das analoge Sprachsignal von einem Analog-Digital-Wandler 52 in ein digitales Signal umgesetzt und dieses in einen Speicher 53 eingelesen. Der Speicher 53 liest es burstweise mit einer höheren Geschwindigkeit wieder aus, um dadurch eine Zeitkompression zu bewirken. Die ausgelesenen digitalen Signalbursts haben eine an die ihnen zugeordneten Kanalzeitschlitze angepaßte Länge. Der Endbereich eines jeden Signalburst wird als Überlappungsinformation parallel auch in einen Überlappungsspeicher 54 eingeschrieben.

Bevor ein Signalburst aus dem Speicher 53 ausgelesen wird, schaltet ein Schalter 55 die Überlappungsinformation des vorangegangenen Signalburst aus dem Überlappungsspeicher 54 an einen Digital-Analog-Wandler 56 durch. Sofort danach leitet der Schalter 55 den Signalburst aus dem Speicher 53 an den Analog-Digital-Wandler 56 weiter, an dessen Ausgang schließlich der zu einer Feststation zu übertragene TCM-Signalburst vorliegt.

Wird anstelle des Analog-Digital-Wandlers 52 ein Abtastschalter zur Erzeugung von pulsamplitudenmodulierten Signalproben, anstelle der Digitalspeicher 53 und 54 ladungsgekoppelte PAM-Speicher (Charge Coupled Devices) und anstelle des Digital-Analog-Wandlers 56 ein Tiefpaßfilter mit n-facher Bandbreite, wie für einen Sprachkanal nötig, verwendet, wobei n der Kanalzahl des TDMA-Systems entspricht, so kann auch mit diesen Schaltelementen die Analog/TCM-Wandlung vorgenommen werden.

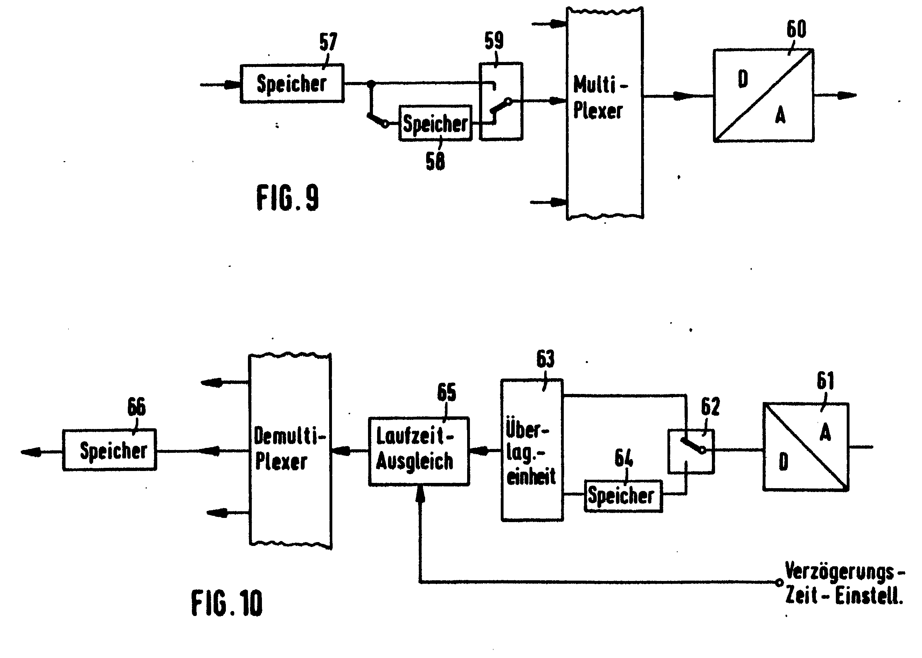

Die Fig. 9 zeigt ein Funktionsschema zur Umwandlung eines PCM-Sprachsignals in TCM-Signalbursts innerhalb einer Feststation. Hierbei wird das digitale Signal in einen Speicher 57 eingelesen. Der Speicher 57 liest es burstweise mit einer höheren Geschwindigkeit wieder aus, um dadurch eine Zeitkompression zu bewirken. Die ausgelesenen digitalen Signalbursts haben eine an die ihnen zugeordneten Kanalzeitschlitze angepaßte Länge. Der Endbereich eines jeden Signalburst wird als Überlappungsinformation parallel auch in einen Überlappungsspeicher 58 eingeschrieben.

Bevor ein Signalburst aus dem Speicher 57 ausgelesen wird, schaltet ein Schalter 59 die Überlappungsinformation des vorangegangenen Signalburst aus dem Überlappungsspeicher 58 über einen Muliplexer (s. 17 in Fig. 3) an einen Digital-Analog-Wandler 60 durch. Sofort danach leitet der Schalter 59 den Signalburst aus dem Speicher 57 an den Analog-Digital-Wandler 60 weiter, an dessen Ausgang schließlich der zu einer Mobilstation zu übertragende TCM-Signalburst vorliegt.

Aus der Fig. 10 geht ein Funktionsschema hervor, nach welchem in einer Feststation die Umwandlung eines analogen zeitkomprimierten (TCM) Signals in ein PCM-Sprachsignal erfolgen kann. Ein von der Feststation empfangener analoger TCM-Signalburst wird zunächst mittels eines Analog-Digital-Wandlers 61 in einen digitalen Signalburst umgesetzt. Der digitale Signalburst gelangt dann über einen Schalter 62 an eine Schaltungseinheit 63. Sobald der als Überlappungsinformation (vgl. Z. 7) in Fig. 6) dienende Endbereich des Signalbursts am Ausgang des Analog-Digital-Wandlers 61 erscheint, schaltet der Schalter 62 auf einen Speicher 64 um, der den Endbereich einliest. In die Schaltungseinheit 63 wird gleichzeitig mit Eingang des Signalburst auch der im Speicher 64 abgelegte Endbereich des vor einer Rahmendauer empfangenen Signalbursts übernommen und dieser Endbereich dem Anfangsbereich des neuen Signalburst nach der oben bereits im Zusammenhang mit Zeile 7) in Fig. 6 beschriebenen Amplitudenbewertung überlagert. Der so in der Schaltungseinheit 63 behandelte Signalburst wird nach einem Laufzeitausgleich 65 über einen Demultiplexer (vgl. 28 in Figur 3) in einen Speicher 66 eingelesen und aus diesem mit einer kleineren, die Zeitkompression rückgängig machenden Geschwindigkeit wieder ausgelesen. Somit liegt am Ausgang des Speichers 66 ein zeitlich dekomprimiertes PCM-Signal vor.

Durch den Einsatz eines Multiplexers und eines Demultiplexers lassen sich die Funktionseinheiten zur PCM-TCM-Wandlung (vgl. Fig. 9) und TCM-PCM-Wandlung (vgl. Fig. 10) mit recht geringen Aufwand gestalten, weil in jeder Übertragungseinrichtung einer Feststation für alle TDMA-Kanäle nur ein Digital-Analog-Umsetzer 60 bzw. nur ein Analog-Digital-Umsetzer 61, nur eine Überlagerungseinheit 63 und eine Laufzeit-Ausgleichseinrichtung 65 für die Zeitdekompression vorhanden sein müssen.

## Patentansprüche

1. Mobilfunksystem für die Übertragung sowohl digitaler als auch analoger Signale zwischen Feststationen (2) und Mobilstationen (4), wobei die Übertragung digitaler Signale nach dem Zeitmultiplex-Verfahren in Kanalzeitschlitzen (K1 ... Kn) erfolgt, die in Rahmen (R1 ... Rn) zusammengefaßt sind und analoge Signale zeitlich komprimiert in den ihnen zugewiesenen Zeitschlitzen übertragen werden, gekennzeichnet durch derartig ausgestaltete Mittel, daß in manchen für die Übertragung von digitalen Signalen vorgesehenen Kanalzeitschlitzen alternativ zu den digitalen Signalen analoge Signale im Zeitmultiplex übertragen werden, daß der Endbereich (Üs, ÜE) eines jeden in einem Kanalzeitschlitz (K1 ... Kn) eines Rahmens (R1 ... Rn) von einer Feststation (2) oder einer Mobilstation (4) ausgesendeten analogen Signals vor dem Beginn desjenigen analogen Signals, das in dem gleichen Kanalzeitschlitz (K1 ... Kn) des nachfolgenden Rahmens (R1 ... R10) ausgesendet wird, wiederholt wird und daß nach dem Empfang eines jeden analogen Signals in einer Feststation (2) oder einer Mobilstation (4) dessen Endbereich (Üs, ÜE) abgetrennt und dem Anfangsbereich (Üs, ÜE) des jeweils eine Rahmendauer später empfangenen analogen Signals derart überlagert wird, daß die durch Einschwingvorgänge aufgetretenen Verzerrungen dieses Signalbereichs kompensiert werden.

2. Mobilfunksystem nach Anspruch 1, gekennzeichnet durch derartig ausgestaltete Mittel, daß in jeder Feststation (2) jeweils die zu einem gemeinsamen Frequenzband gehörenden Signalkanäle (K1 ... Kn) mittels Multiplexern (7, 11, 17) im Rahmen (R1 ... R10) zusammengefaßt und alle Rahmen in einem kontinuierlichen Signalstrom über einen auf das jeweilige Frequenzband abgestimmten Sender (15) an die Mobilstationen (4) ausgesendet werden und daß die Mobilstationen (4) ihre Signalkanäle burstweise in den ihnen in den Rahmen (R1 ... R10) zugeordneten Kanalzeitschlitzen (K1 ... Kn) aussenden.

3. Mobilfunksystem nach Anspruch 1, gekennzeichnet durch derartig ausgestaltete Mittel, daß am Anfang eines jeden Kanalzeitschlitzes (K1 ... Kn) vor einem Nutzinformation beinhaltenden analogen oder digitalen Signal ein Synchronwort (KSyn), eine Kanaladresse (Adr) und andere der Nutzinformation zugeordnete Signalisierung (Sig) in digitaler Form übertragen werden.

4. Mobilfunksystem nach Anspruch 1 oder 3, gekennzeichnet durch derartig ausgestaltete Mittel, daß Sprache entweder in Form analoger Signale oder in Form digitaler Signale übertragen wird, wobei die Digitalisierung der Sprache mittels Sprachkodierern (9) erfolgt.

5. Mobilfunksystem nach einem der vorhergehenden Ansprüche, gekennzeichnet durch derartig ausgestaltete Mittel, daß die Sprache, bevor sie als analoges Signal von einer Feststation (2) oder einer Mobilstation (4) ausgesendet wird, pulscodemoduliert in einen Speicher (16, 53, 57) eingelesen und das pulscodemodulierte Signal burstweise zur Erzielung einer Zeitkompression mit höherer Geschwindigkeit wieder ausgelesen wird, wobei die pulscodemodulierten Signalbursts in ihrer Länge an den in den Kanalzeitschlitzen (K1 ... Kn) zur Verfügung stehenden Zeitbereich angepaßt sind, daß der Endbereich (Üs, ÜE) eines jeden aus dem Speicher (16, 53, 57) ausgelesenen pulscodemodulierten Signalburst zusätzlich abgespeichert und jedem aus dem Speicher (16, 53, 57) ausgelesenen pulscodemodulierten Signalburst der vom vorhergehenden Signalburst abgespeicherte Endbereich (Üs, ÜE) vorangesetzt wird und daß jeder so zusammengestellte Signalburst in der ihm zugeordneten Rahmenzeit und in dem ihm zugeordneten Kanalzeitschlitz an einem Digitalanalog-Wandler (18, 56, 60) durchgeschaltet und als Analogsignal ausgesendet wird.

6. Mobilfunksystem nach Anspruch 5, gekennzeichnet durch derartig ausgestaltete Mittel, daß die von einer Feststation (2) oder einer Mobilstation (4) burstweise empfangenen analogen Signale in pulscodemodulierte Signalbursts gewandelt werden, daß der Endbereich (Üs, ÜE) eines jeden pulscodemodulierten Signalbursts abgetrennt und abgespeichert wird, daß der Anfangsbereich (Üs, ÜE) eines eine Rahmendauer später folgenden pulscodemodulierten Signalbursts eine von 0 auf 1 ansteigende Amplitudenbewertung erfährt und der abgespeicherte Endbereich (Üs, ÜE) des vorangegangenen Signalbursts umgekehrt von 1 auf 0 abfallend amplitudenbewertet dem Anfangsbereich (Üs, ÜE) überlagert wird und daß nach dieser Überlagerung der Signalburst in einen Speicher (29, 50, 66) eingeschrieben und mit einer die Zeitkompression rückgängig machenden Geschwindigkeit wieder ausgelesen wird.

7. Mobilfunksystem nach einem der vorhergehenden Ansprüche 1 bis 4, gekennzeichnet durch derartig ausgestaltete Mittel, daß die Sprache, bevor sie als analoges Signal von einer Feststation (2) oder einer Mobilstation (4) ausgesendet wird, pulsamplitudenmoduliert wird und die PAM-Abtastweite in einen ladungsgekoppelten PAM-Speicher eingelesen und das pulsamplitudenmodulierte Signal burstweise zur Erzielung einer Zeitkompression mit höherer Geschwindigkeit wieder ausgelesen wird, wobei die pulsamplitudenmodulierten Signalbursts in ihrer Länge an den in den Kanalzeitschlitzen zur Verfügung stehenden Zeitbereich angepaßt sind, daß der Endbereich (Üs, ÜE) eines jeden aus dem ladungsgekoppelten PAM-Speicher ausgelesenen pulsamplitudenmodulierten Signalburst zusätzlich abgespeichert und jedem aus dem ladungsgekoppelten PAM-Speicher ausgelesenen pulsamplitudenmodulierten Signalburst der vom vorhergehenden Signalburst abgespeicherte Endbereich (Üs, ÜE) vorangesetzt wird und daß jeder so zusammengestellte Signalburst in der ihm zugeordneten Rahmenzeit und in dem ihm zugeordneten Kanalzeitschlitz (K1 ... Kn) an ein PAM-Filter durchgeschaltet und als Analogsignal ausgesendet wird.

8. Mobilfunksystem nach Anspruch 7, gekennzeichnet durch derartig ausgestaltete Mittel, daß die von einer Feststation (2) oder einer Mobilstation (4) burstweise empfangenen analogen Signale in pulsamplitudenmodulierte Signalbursts gewandelt werden, daß der Endbereich (Üs, ÜE) eines jeden amplitudenmodulierten Signalbursts abgetrennt und abgespeichert wird, daß der Anfangsbereich (Üs, ÜE) eines eine Rahmendauer später folgenden pulsamplitudenmodulierten Signalbursts eine von 0 auf 1 ansteigende Amplitudenbewertung erfährt und der abgespeicherte Endbereich (Üs, ÜE) des vorangegangenen Signalbursts umgekehrt von 1 auf 0 abfallend amplitudenbewertet dem Anfangsbereich (Üs, ÜE) überlagert wird und daß nach dieser Überlagerung der Signalburst in einen ladungsgekoppelten PAM-Speicher eingeschrieben und mit einer die Zeitkompression rückgängig machenden Geschwindigkeit wieder ausgelesen wird.

**Claims**

1. Mobile radio system for the transmission of digital as well as also analog signals between fixed stations (2) and mobile stations (4), wherein the transmission of digital signals takes place by the time multiplex method in channel time slots (K1 ... Kn), which are combined into frames (R1 ... Rn), and analog signals are transmitted compressed in time in the time slots allotted to them, characterised by means structured in such a manner that analog signals are transmitted in time multiplex alternatively to the digital signals in some of the channel time slots provided for the transmission of digital signals, that the end region (Üs, ÜE) of each analog signal emitted from a fixed station (2) or a mobile station (4) in a channel time slot (K1 ... Kn) of a frame (R1 ... Rn) is repeated before the beginning of that analog signal, which is emitted in the same channel time slot (K1 ... Kn) of the succeeding frame (R1 ... R10), and that, after the exception of each analog signal in a fixed station (2) or a mobile station (4), its end region (Üs, ÜE) is cut off and superimposed in such a manner on the initial region (Üs, ÜE) of the analog signal respectively received one frame period later that the distortions of this signal region, which have arisen through transient processes, are compensated for.

2. Mobile radio system according to claim 1, characterised by means structured in such a manner that the signal channels (K1 ... Kn) respectively belonging to a common frequency band are combined in each fixed station (2) into frames (R1 ... R10) by means of multiplexers (7, 11, 17) and all frames are emitted to the mobile stations (4) in a continuous signal flow by way of a transmitter (15) tuned to the respective frequency band and that the mobile stations (4) emit their signal channels in bursts in the channel time slots (K1 ... Kn) allotted to them in the frames (R1 ... R10).

3. Mobile radio system according to claim 1, characterised by means structured in such a manner that a synchronising word (KSyn), a channel address (Adr) and other signalling (Sig) associated with the wanted information are transmitted in digital form at the beginning of each channel time slot (K1 ... Kn) before an analog or digital signal containing wanted information.

4. Mobile radio system according to claim 1 or 3, characterised by means structured in such a manner that speech is transmitted either in the form of analog signals or in the form of digital signals, wherein the digitalising of the speech takes place by means of speech coders (9).

5. Mobile radio system according to one of the preceding claims, characterised by means structured in such a manner that speech, before it is emitted as analog signal from a fixed station (2) or a mobile station (4), is entered in pulse-code-modulated form into a store (16, 53, 57) and the pulse-code-modulated signal is read out again in bursts at higher speed for the achievement of a time compression, wherein the pulse-code-modulated signal bursts are matched in their length to the time span standing at disposal in the channel time slots (K1 ... Kn), that the end region (Üs, ÜE) of each pulse-code-modulated signal burst read out from the store (16, 53, 57) is stored additionally and the end region (Üs, ÜE) stored of the preceding signal burst is put in front of each pulse-code-modulated signal burst read out from the store (16, 53, 57) and that each signal burst thus assembled is switched through to a digital-to-analog converter (18, 56, 60) and emitted as analog signal in the frame time allotted to it and in the channel time slot allotted to it.

6. Mobile radio system according to claim 5, characterised by means structured in such a manner that the analog signals received in bursts from a fixed station (2) or a mobile station (4) are converted into pulse-code-modulated signal bursts, that the end region ($\ddot{U}_S$, $\ddot{U}_E$) of each pulse-code-modulated signal burst is cut off and stored, that the initial region ($\ddot{U}_S$, $\ddot{U}_E$) of a pulse-code-modulated signal burst following one frame period later experiences an amplitude weighting rising from 0 to 1 and the stored end region ($\ddot{U}_S$, $\ddot{U}_E$) of the preceding signal burst, weighted in amplitude conversely falling from 1 to 0, is superimposed on the initial region ($\ddot{U}_S$, $\ddot{U}_E$) and that the signal burst is after this superimposition entered into a store (29, 50, 66) and read out again at a speed which reverses the time compression.

7. Mobil radio system according to one of the preceding claims 1 to 4, characterised by means structured in such a manner that speech, before it is emitted as analog signal from a fixed station (2) or a mobile station (4), is pulse-amplitude-modulated and the pulse amplitude modulation scanning values are entered into a charge-coupled pulse amplitude modulation store and the pulse-amplitude-modulated signal is read out again in bursts at higher speed for the achievement of a time compression, wherein the pulse-amplitude-modulated signal bursts are matched in their length to the time span standing at disposal in the channel time slots, that the end region ($\ddot{U}_S$, $\ddot{U}_E$) of each pulse-amplitude-modulated signal burst read out from the charge-coupled pulse amplitude modulation store is stored additionally and the end region ($\ddot{U}_S$, $\ddot{U}_E$) stored of the preceding signal burst is put in front of each pulse-amplitude-modulated signal burst read out from the charge-coupled pulse amplitude modulation store and that each signal burst thus assembled is switched through to a pulse amplitude modulation filter and emitted as analog signal in the frame time allotted to it and in the channel time slot (K1 ... Kn) allotted to it.

8. Mobile radio system according to claim 7, characterised by means structured in such a manner that the analog signals received in bursts from a fixed station (2) or a mobile station (4) are converted into pulse-amplitude-modulated signal bursts, that the end region ($\ddot{U}_S$, $\ddot{U}_E$) of each pulse-amplitude-modulated signal burst is cut off and stored, that the initial region ($\ddot{U}_S$, $\ddot{U}_E$) of a pulse-amplitude-modulated signal burst following one frame period later experiences an amplitude weighting rising from 0 to 1 and the stored end region ($\ddot{U}_S$, $\ddot{U}_E$) of the preceding signal burst, weighted in amplitude conversely falling from 1 to 0, is superimposed on the initial region ($\ddot{U}_S$, $\ddot{U}_E$) and that the signal burst is after this superimposition entered into a charge-coupled pulse amplitude modulation store and read out again at a speed which reverses the time compression.

## Revendications

1. Système hertzien mobile pour transmettre aussi bien des signaux numériques que des signaux analogiques entre des stations fixes (2) et des stations mobiles (4), la transmission de signaux numériques s'effectuant selon le procédé de multiplexage dans le temps, dans des tranches de temps de canal (K1 ... Kn) qui sont groupées en trames (R1 ... Rn), et des signaux analogiques étant transmis comprimés dans le temps, dans les tranches de temps qui leur sont affectées, caractérisé par des moyens conçus et réalisés de manière telle que, dans plusieurs tranches de temps de canal prévues pour la transmission de signaux numériques, des signaux analogiques soient transmis en multiplex dans le temps, en tant qu'alternative aux signaux numériques; que la plage extrême ($\ddot{U}_S$, $\ddot{U}_E$) de chaque signal analogique qu'une station fixe (2) ou mobile (4) émet dans une tranche de temps de canal (K1 ... Kn) d'une trame (R1 ... Rn) soit répétée avec le début du signal analogique émis dans la même tranche de temps de canal (K1 ... Kn) de la trame suivante (R1 ... R10); et qu'après la réception de chaque signal analogique, dans une station fixe (2) ou dans une station mobile (4), la plage extrême ($\ddot{U}_S$, $\ddot{U}_E$) de celui-ci soit séparée et superposée à la plage initiale ($\ddot{U}_S$, $\ddot{U}_E$) du signal analogique reçu une durée de trame plus tard, de façon telle que les distorsions de cette plage de signal dues aux phénomènes transitoires soient compensées.

2. Système hertzien mobile selon revendication 1, caractérisé par des moyens conçus et réalisés de manière telle que, dans chaque station fixe (2), les canaux de signaux (K1 ... Kn) appartenant à une bande de fréquence commune soient rassemblés en trames (R1 ... R10) au moyen de multiplexeurs (7, 11, 17), et toutes les trames soient envoyées, en un courant continu de signaux, via l'émetteur (15) accordé sur la bande de fréquence concernée, aux stations mobiles (4); et que les stations mobiles (4) émettent leurs canaux de signaux par paquets dans les tranches de temps de canal (K1 ... Kn) qui leur sont affectées dans les trames (R1 ... R10).

3. Système hertzien mobile selon revendication 1, caractérisé par des moyens conçus et réalisés de manière telle qu'au début de chaque tranche de temps de canal (K1 ... Kn), avant un signal numérique ou analogique contenant une information utile, un mot de synchronisation (KSyn), une adresse de canal (Adr) et autre signalisation (Sig) affectée à l'information utile, soient transmis sous forme numérique.

4. Système hertzien mobile selon revendication 1 ou 3, caractérisé par des moyens conçus et réalisés de manière telle que de la parole soit sous forme de signaux analogiques soit sous forme de signaux numériques, la numérisation de la parole s'effectuant au moyen de codeurs de parole (9).

5. Système hertzien mobile selon l'une des revendications précédentes, caractérisé par des moyens conçus et réalisés de manière telle que la parole, avant d'être émise en tant que signal analogique, par une station fixe (2) ou par une station mobile (4), soit introduite, modulée par impulsions codées, dans une mémoire (16, 53, 57) et le signal modulé par impulsions codées est repris par paquets, à une vitesse plus élevée afin d'obtenir une compression dans le temps, les paquets de signaux modulés par impulsions codées ayant leur longueur adaptée à la plage de temps disponible dans les tranches de temps de canal (K1 ... Kn); que la plage extrême ($\ddot{U}_S$, $\ddot{U}_E$) de chaque paquet de signaux modulés par impulsions codées, tiré de la mémoire (16, 53, 57), soit l'objet d'une mémorisation supplémentaire et la plage extrême ($\ddot{U}_S$, $\ddot{U}_E$) mémorisée lors du paquet de signaux précédent soit mise en tête de chaque paquet de signaux modulés par impulsions codées tiré de la mémoire (16, 53, 57); et que chaque paquet de signaux ainsi composé soit transmis, dans le temps de trame qui lui est affecté et dans la tranche de temps de canal qui lui est affectée, à un convertisseur numérique-analogique (18, 56, 60) et soit émis en tant que signal analogique.

6. Système hertzien mobile selon revendication 5, caractérisé par des moyens conçus et réalisés de manière telle que les signaux analogiques reçus, par paquets, d'une station fixe (2) ou d'une station mobile (4) soient convertis en paquets de signaux modulés par impulsions codées; que la plage extrême ($\ddot{U}_S$, $\ddot{U}_E$) de chaque paquet de signaux modulés par impulsions codées soit séparée et mémorisée; que la plage initiale ($\ddot{U}_S$, $\ddot{U}_E$) d'un paquet de signaux modulés par impulsions codées qui arrive ensuite, une durée de trame plus tard, subisse une pondération d'amplitude croissant de 0 à 1 et la plage extrême mémorisée ($\ddot{U}_S$, $\ddot{U}_E$) du paquet de signaux précédent subisse une pondération inverse, décroissant de 1 à 0, et soit superposée à la plage initiale ($\ddot{U}_S$, $\ddot{U}_E$); et qu'après cette superposition le paquet de signaux soit inscrit dans une mémoire (29, 50, 66) puis lu à une vitesse annulant la compression dans le temps.

7. Système hertzien mobile selon l'une des revendications 1 à 4 précédentes, caractérisé par des moyens conçus et réalisés de manière telle qu'avant d'être émise en tant que signal analogique, par une station fixe (2) ou par une station mobile (4), la parole soit traitée sous forme d'impulsions modulées en amplitude, et l'étendue de l'échantillonnage PMA soit introduite dans une mémoire PAM à transfert de charge et le signal d'impulsions modulées en amplitude soit repris par paquets, à une vitesse plus grande afin d'obtenir une compression dans le temps, les paquets de signaux d'impulsions modulées en amplitude ayant une longueur adaptée à la plage de temps disponible dans les tranches de temps de canal; que la plage extrême ($\ddot{U}_S$, $\ddot{U}_E$) de chaque paquet de signaux d'impulsions modulées en amplitude tiré de la mémoire PAM à transfert de charge subisse une mémorisation supplémentaire et la plage extrême ($\ddot{U}_S$, $\ddot{U}_E$) mémorisée du paquet de signaux précédents soit mise en tête de chaque paquet de signaux d'impulsions modulées en amplitude tiré de la mémoire PAM à transfert de charge; et que chaque paquet de signaux ainsi composé soit transmis, dans le temps de trame qui lui est affecté et dans la tranche de temps de canal (K1 ... Kn) qui lui est affectée, à un filtre PAM, et soit émis en tant que signal analogique.

8. Système hertzien mobile selon la revendication 7, caractérisé par des moyens conçus et réalisés de manière telle que les signaux analogiques reçus par paquets par une station fixe (2) ou par une station mobile (4) soient convertis en paquets de signaux d'impulsions modulées en amplitude; que la plage extrême ($\ddot{U}_S$, $\ddot{U}_E$) de chaque paquet d'impulsions modulées en amplitude soit séparée et mémorisée; que la plage initiale ($\ddot{U}_S$, $\ddot{U}_E$) d'un paquet de signaux d'impulsions modulées en amplitude, survenant une durée de trame plus tard, subisse une pondération d'amplitude croissant de 0 à 1, et la plage extrême mémorisée ($\ddot{U}_S$, $\ddot{U}_E$) du paquet de signaux précédent, pondérée en amplitude de manière inverse, en décroissant de 1 à 0, soit superposée à la plage initiale ($\ddot{U}_S$, $\ddot{U}_E$); et qu'après cette superposition le paquet de signaux soit introduit dans une mémoire PAM à transfert de charge et soit relu à une vitesse annulant la compression dans le temps.

Feststation 2

Mobilstation 4

Funkvermittlungsstelle 1

Fernsprechernetz

Fernsprechvermittlung 5

3

FIG.1

FIG.2

EP 0 219 559 B1

FIG.3

EP 0 219 559 B1

Datenausgang
Dateneingang

37 Sprach-Decoder

38 Sprach-Coder

36 De-mux

39 Mux

34

40

35 Steuerung und Bedienung

43 TCM/Analog Wdlg.

33 Demodulator

41 Modulator

45 Analog/TCM Wdlg.

42

44

30 Empfänger

32 Frequenzeinst., Taktaufbereitung Rahmen- u. Kanal-Sync.

31 Sender

FIG. 4

**FIG. 5**

EP 0 219 559 B1

FIG.6

FIG. 7

FIG. 8

FIG. 9

FIG. 10

EP 0 219 559 B1